# EUROPEAN PATENT APPLICATION

(11) **EP 1 995 953 A2**
(43) Date of publication of application: **26.11.2008**
(21) Application number: 08009571.4
(22) Date of filing: 26.05.2008
(51) Int. Cl.: H04N 5/44, H04N 5/445

(54) **Digital broadcasting receiver**

(30) Priority: 25.05.2007 JP 2007139760
(71) Applicant: Funai Electric Co., Ltd., Osaka 574-0013 (JP)
(72) Inventor: Tokoshima, Susumu, Daito-shi, Osaka 574-0013 (JP); Matsunaga, Junichi, Daito-shi, Osaka 574-0013 (JP); Noda, Yutaka, Daito-shi, Osaka 574-0013 (JP)
(74) Representative: Grünecker, Kinkeldey, Stockmair & Schwanhäusser Anwaltssozietät

(57) **Abstract**

In a digital broadcasting receiver (1) including: a tuner (2) that takes out a signal of a specific frequency band from an RF (Radio Frequency) signal; a demodulating unit (3) to which an output signal of the tuner (2) is inputted; a signal separation unit (5) that separates an output signal of the demodulating unit (3) into video data, audio data, caption data, and control data including language information; a memory unit (13) in which a channel list is stored; an input unit (12) that performs channel operation; and a control unit (4) that controls the channel based on a control signal from the input unit (12), a language of a caption and/or audio is selected at the input unit (12), the control unit (4) reads out the language information of the control data, and the channel corresponding to the language selected at the input unit (12) is stored in the channel list of the memory unit (13) based on the language information.

## Description

### BACKGROUND OF THE INVENTION

### 1. Field of the Invention

The present invention relates to a digital broadcasting receiver, and more specifically, relates to a digital broadcasting receiver that creates a channel list based on a selected language.

### 2. Description of the Related Art

In the digital television broadcasting, a logical channel number (LCN; hereinafter simply referred to as a "logical channel") is determined, and the channel list is created based on the order of the logical channels. Therefore the channels could not be listed on the basis of contents such as a language of audio and a caption of a program or the like.
The logical channel is different from a physical channel in concept. A plurality of logical channels may be included in one physical channel, in the digital television broadcasting. That is, the physical channel is corresponding to a selected specific frequency band, and the logical channel is corresponding to each line selected from a plurality of lines included in the specific frequency band. In North America, the logical channel is referred to as a virtual channel.

With the channel list based on the order of the logical channel, a viewer is required to switch a channel across the channels being broadcast in a language which he/she does not want to watch, when he/she changes the channel by using a channel UP key and a channel DOWN key.
On the other hand, the language of the audio and the caption differs not by broadcasting stations but by programs, and therefore, if the channel list is set in advance based on the broadcasting station, the channel list based on the language cannot be obtained.

Japanese Unexamined Patent Publication No. 2001-160956 proposes a television receiver that receives television signals in which teletext information including station name information and textual information is multiplexed and determines a broadcasting station and an area to which the broadcasting station belongs by the station name information included in the teletext information, thereby automatically setting the language of the textual information to be displayed based on the determined broadcasting station and the area to which the broadcasting station belongs.

Japanese Unexamined Patent Publication No. 08-195914 proposes a channel selection device in which a search priority of a plurality of kinds of broadcasting stations is set for at least one of the country and the language, for searching broadcasting station identification information according to the search priority based on the country information or the language information inputted by a viewer. This channel selection device stores the correspondence relationship between the broadcasting station identification information and search time in advance and conducts a search based on the stored information, thereby enabling to shorten the search time.

Japanese Unexamined Patent Publication No. 08-191433 proposes a method for providing a subtitle, in which all pages including subtitle information such as a language name, a language number, and a page number are listed on one or more tables, which is referred to as an initial subtitle table, and the initial subtitle table can be displayed as a general teletext page. By the method for providing a subtitle, the language of the subtitle can be selected.

Japanese Unexamined Patent Publication No. 2002-262246 proposes an output information control device in which when availability of additional information, which can be transmitted together with video information, is limited, in the digital television broadcasting, for example, caption information as the additional information is available in up to two languages, so that other relevant information, which is not sent together with the additional information and video signals, such as various caption information available in more than two languages is stored, and the stored relevant information and the video of the received video signals are related to each other to be displayed.

However, the television receiver disclosed in Japanese Unexamined Patent Publication No. 2001-160956 automatically determines and sets the language to be displayed based on the broadcasting station from which the viewer receives and the area to which the broadcasting station belongs, so that it is not possible to select the broadcast language.

The channel selection device disclosed in Japanese Unexamined Patent Publication No. 08-195914 automatically presets the channel of the broadcasting station to be received, so that the channel is selected on the basis of each broadcasting station. When the channel is selected on the basis of each broadcasting station in this manner, it is not possible to select the program which the viewer wants to watch based on the broadcast language.

In the method for providing a subtitle disclosed in Japanese Unexamined Patent Publication No. 08-191433, the viewer selects the program, and after that he/she selects the language to be displayed in the subtitle such as an Western European language and an Eastern European language, so that this is not to be used in creating the channel list. That is, there is a case in which the subtitle of the desired language is not displayed when the program is selected. Also, he/she cannot select the audio at all.

The output information control device disclosed in Japanese Unexamined Patent Publication No. 2002-262246 is for displaying the information, which is not sent together with the video signals included in the television broadcast wave, for example, the relevant information such as various caption information, together with the video in real time, so that it is not for selecting the program in which the language is set by the viewer.

### SUMMARY OF THE INVENTION

The present invention is made in view of the above-described circumstances, and an object thereof is to provide a digital broadcasting receiver that creates a channel list based on the language of audio and a caption to be broadcast.

In order to achieve the above-described object, the present invention takes the following technical measures.
According to the present invention, in a digital broadcasting receiver including: a tuner that takes out a signal of a specific frequency band from an RF (radio frequency) signal; a demodulating unit to which an output signal of the tuner is inputted; a signal separation unit that separates an output signal of the demodulating unit into video data, audio data, caption data, and control data including language information; a memory unit in which a channel list is stored; an input unit that performs channel operation; and a control unit that controls the channel based on a control signal from the input unit, language of a caption and/or audio is selected at the input unit, the control unit reads out the language information of the control data, and the channel corresponding to the language selected at the input unit is stored in the channel list in the memory unit based on the language information.

According to this manner, the language of the audio and the caption is selected by the viewer, and the channel list corresponding to the selected language is created based on the control data included in the broadcasting signal from the broadcasting station, so that the list of channels being broadcast in the language desired by the viewer may be created based on broadcast contents, that is, the contents of the program.
Therefore, when the viewer changes the channel, for example by using an UP key or a DOWN key of a remote controller, it is not necessary to change the channel across the channels being broadcast in the language not desired by the viewer, so that the operability of the channel is improved.
The language information, included in the signal sent from the broadcasting station or the like, identifies the language of the video data, the audio data, and the caption data, which are components of the program.

In the present invention, the channel list may be displayed using an OSD (On Screen Display) when setting the channels.
In this manner, since the channel list is displayed on the display by the OSD, the viewer can change the channel list while checking the channel list on the display, so that convenience in changing the channel list is improved.

In the present invention, the control unit may read out the language information regularly or irregularly, and the channel list may be automatically updated based on the selected language.
Even in the same channel, there is a case in which different languages are used in the audio and caption according to time slots. Therefore, by automatically reading out the language information in this manner, the channel list corresponding to the language selected by the viewer is created all the time, so that the viewer does not have to select the language many times, and the operability of the channel is improved.

In the present invention, the language information may be included in a component descriptor of an EIT (Event Information Table) in a transport stream.
In this manner, ETSI EN300 468, which is the standard of the European digital television broadcasting, can be used. As described above, when the viewer selects the language of the audio and the caption and the channel list including the selected language is created, this is effective especially in the European countries having boundaries with neighboring countries and the broadcast of the neighboring countries is often received.
The component descriptor included in the EIT of the signal sent from the broadcasting station is described, in terms of time, for each event such as a news flash and a first half of a soccer game. Since a program is composed of one or more events, the language can be selected on the basis of each program and each event.
Further, the component descriptor is described, in terms of contents, for each component such as the audio and the caption. Therefore, the viewer can select a language for each caption/audio on the basis of each program and each event. Since the EIT also includes time information of the event, it is possible to confirm starting time and the length of the program being broadcast in the desired language in advance.

According to the present invention, a digital broadcasting receiver capable of creating a channel list based on the language of the audio and caption to be broadcast can be obtained.

### BRIEF DESCRIPTION OF THE DRAWINGS

Fig. 1 is a block diagram of a digital broadcasting receiver according to an embodiment of the present invention;
Fig. 2 is a diagram showing a structure of a transport stream;
Fig. 3 is a flowchart for setting channel list according to the embodiment of the present invention;
Fig. 4 is a diagram showing one example of a program after finishing an automatic search;
Fig. 5 is a diagram showing one example of a state in which a language is selected; and
Fig. 6 is a diagram showing one example of a channel list.

### DETAILED DESCRIPTION OF THE PREFERRED EMBODIMENTS

Hereinafter, an embodiment of the present invention will be described with reference to the drawings.

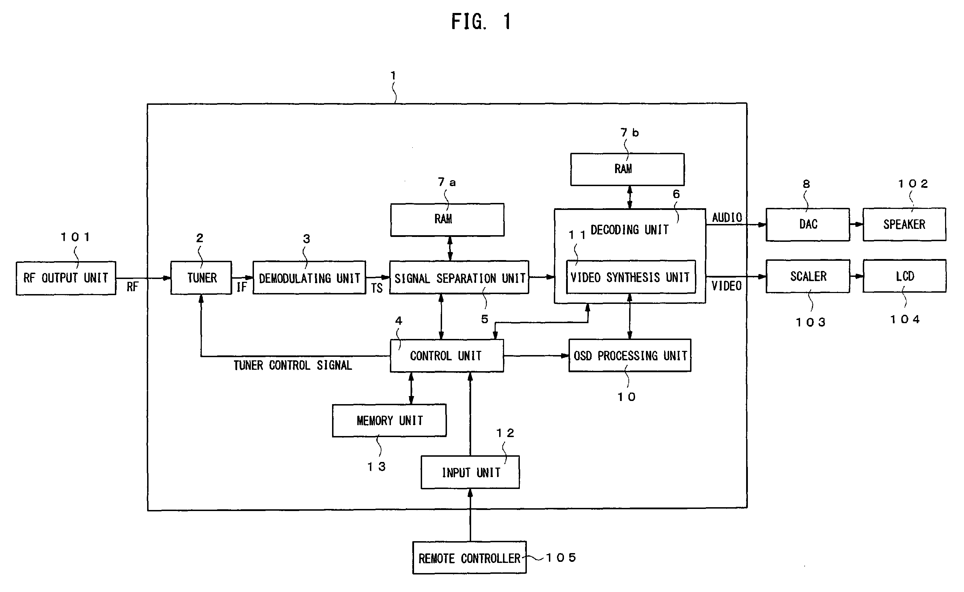

Fig. 1 is a block diagram of a digital broadcasting receiver 1 according to the embodiment of the present invention.
In the digital broadcasting receiver 1, an RF (Radio Frequency) signal is inputted from an RF output unit 101 such as an antenna and a cable to a tuner 2. The tuner 2 separates a signal having frequency of specific band from the RF signal and converts the same to an IF (Intermediate Frequency) signal, and after that, inputs the IF signal to a demodulating unit 3.

The tuner 2 selects a physical channel based on a tuner control signal from a control unit 4. That is, the tuner 2 takes out a signal of the specific frequency band from the RF signal. The physical channel selected by the tuner 2 is different from the logical channel in concept as described above, and corresponding to a selected specific frequency band. In digital broadcasting, a plurality of logical channels (programs) is included in one physical channel. The specific frequency band refers to a frequency band of a signal sent from each broadcasting station.

Then, the IF signal inputted to the demodulating unit 3 is demodulated at the demodulating unit 3 and is converted to a transport stream (TS). An error correction circuit, a descrambler, and the like are also incorporated in the demodulating unit 3.

A signal separation unit 5 includes a demultiplexer, and separates an inputted transport stream into packets of video data, audio data, caption data, and control data.
The control data includes PSI/SI to be described later, and the control unit 4 analyzes the control data to reconstruct the separated packets, thereby a plurality of programs is obtained. That is, by information included in the PSI/SI, a plurality of logical channels is taken out from one physical channel.

The video data, the audio data, and the caption data outputted from the signal separation unit 5 are inputted to a decoding unit 6. The decoding unit 6 includes an MPEG (Moving Pictures Expert Group) decoder to decode coded video data or the like.
RAMs (Random Access Memory) 7a and 7b temporarily store various data separated at the signal separation unit 5 and various data decoded at the decoding unit 6 and synchronize the video data and the audio data.

The audio data decoded at the decoding unit 6 is converted from a digital signal to an analog signal at a DAC (Digital Analog Converter) 8 and is outputted from a speaker 102.
An OSD (On Screen Display) processing unit 10 creates various setting screens such as a channel list and an EPG (Electronic Program Guide), based on an input signal from the control unit 4, and inputs the same to a video synthesis unit 11.

The video synthesis unit 11 synthesizes the video data such as the caption and the EPG inputted from the OSD processing unit 10, with the video data such as a person and landscape in a real program. The synthesized video data is inputted to a scaler 103, and an image thereof is scaled to be adjusted to a screen size of an LCD (Liquid Crystal Display) 104, then displayed on the LCD 104.

An input unit 12 receives an infrared signal from a remote controller 105 and inputs a control signal for channel operation such as channel change, channel list creation, language selection and the like, to the control unit 4. Although the channel operation such as the channel list creation is herein performed by means of the remote controller 105, an input unit capable of directly inputting may be provided on a main body of the digital broadcasting receiver 1.
The control unit 4 includes a CPU (Central Processing Unit) and controls the digital broadcasting receiver 1 including the channel control in a comprehensive manner.
A memory unit 13 connected to the control unit 4 includes a nonvolatile memory such as a flash memory, and various pieces of information such as the channel list and the EPG information are stored in the memory unit 13.

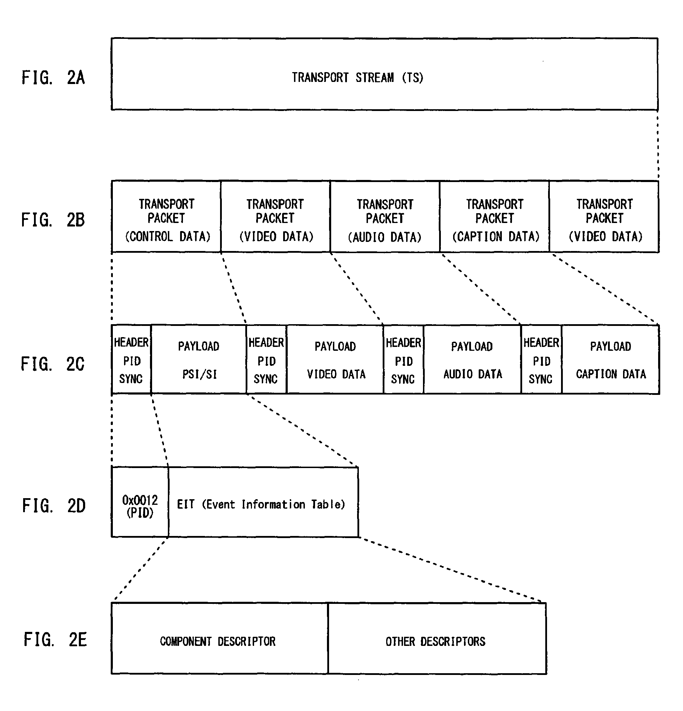

Fig. 2 is a diagram showing a structure of a transport stream. As described above, in the digital broadcasting, the signal received by the digital broadcasting receiver 1 is converted to a transport stream (TS) at the demodulating unit 3 through a predetermined process. The transport stream includes a plurality of transport packets (hereinafter, referred to as "TS packets"), as shown in Figs. 2A and 2B. The TS packet comprises a packet including the control data, a packet including the video data, a packet including the audio data, and a packet including the caption data, and each TS packet has a fixed length of 188 bytes.

As shown in Fig. 2C, the TS packet has a header and a payload.
The header includes a packet identifier (PID) and information regarding synchronization (SYNC) of the TS packets. The TS packets are identified by the PIDs. The payload includes the PSI/SI as the control data, the video data, the audio data, and the caption data.

Details of the PSI (Program Specific Information) are defined by the ISO/IEC (International Organization for Standardization; International Electrotechnical Commission). Standard data necessary for separating the transport streams and reproducing the programs is contained in the PSI. The PSI includes a PAT (Program Association Table) as a table in which information regarding the PIDs of the TS packets is described and a CAT (Conditional Access Table) as a table in which information regarding receiving conditions is described or the like.

The SI (Service information) is defined in addition to the PSI by the ETSI (European Telecommunications Standards Institute), and includes information of various services or the like in DVB (Digital Video Broadcasting) which is the standard of the European digital television broadcasting. The SI includes the PSI.
The SI includes various tables, one of which is an EIT (Event Information Table) as shown in Fig. 2D. Other than this, the SI includes, for example, an SDT (Service Description Table) and a BAT (Bouquet Association Table) and the like.

The EIT includes data regarding a program such as time-oriented information about an event and a program, an event name, starting time, a length of the program, broadcast language and the like. The SDT includes data regarding a service such as a name of the service, a service provider, and the like. The BAT includes data regarding a service performed across a ground wave network, a cable television network, and the like. The BAT is information regarding an assemblage of services in the case where, for example, one broadcasting station provides different services between the ground wave and the cable television.
In the above description, the "event" refers to a news flash, a first half of a soccer game, a first part of an entertainment show, and the like. The "program" refers to news, an entertainment show, and the like, which is composed of one or more events. The "service" refers to consecutive programs broadcast from one broadcasting station.
Therefore, in the EIT, various pieces of information can be sent on the basis of each event and each program.

As shown in Fig. 2E, the EIT includes various descriptors. The descriptors include a component descriptor describing a screen size of video and the language of audio and captions or the like in a stream. Other descriptors include, for example, a service descriptor, describing a service provider name and a service type such as digital television and digital radio, and a content descriptor describing which of the news, comedy, documentary or the like, the event is. The ETSI defines which descriptor is to be described in which table of the SDT, EIT and the like.

In the present embodiment, the channel list is created using the component descriptor included in the EIT. In the component descriptor, language information corresponding to components such as video data, audio data, and caption data is separately described for each component.
For example, in a case where English is available in the audio and English and German are available in the caption, it is programmed such that available languages can be found for each component as English is available in the audio component and English and German are available in the caption component. Also, since the component descriptor is included in the EIT, the language information of each component can be obtained for each event. Time information regarding the starting time of the event (program), the length of the program, and the like is included in the EIT as described above.

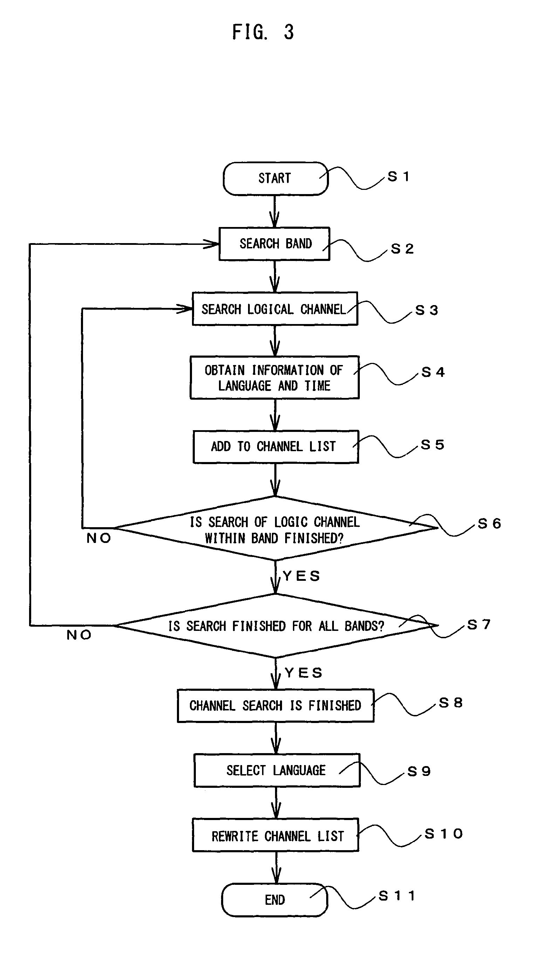

Fig. 3 is a flowchart for setting channel list of the present embodiment.
The channel setting includes the steps of searching a channel and selecting a language. Steps S1 to S8 correspond to the steps of searching the channel, and steps S9 and S10 correspond to the steps of selecting the language.
When a viewer presses an auto search button of the remote controller 105, the channel setting screen by the OSD is displayed on the LCD 104, and the channel setting is started (step S1). First, the frequency at which the digital broadcasting is broadcast, that is, the band in which the digital broadcasting can be received is searched (step S2). Therefore, in step S2, the physical channel is searched by changing the frequency to be received by the tuner 2.

When the broadcast band is found, the logical channel is searched in the found band (step S3). When the logical channel is found, the component descriptor included in the EIT is read out by the control unit 4 (Fig. 1) to obtain the language information of the audio and caption as well as the time information (step S4). Then, the logical channel including the language information and the time information is added to the channel list of the memory unit 13 (step S5).

After that, it is confirmed whether the search of the logical channel within the band is finished or not (step S6) . When the search is not finished (NO in step S6), the procedure returns to step S3 to further search the logical channel. When the search is finished (YES in step S6), it is confirmed whether the search is finished for all of the bands or not (step S7). If the search is not finished, the procedure returns to step S2 (NO in step S7), and the search is conducted in the next band in the same manner.

If the search is finished for all of the bands (YES in step S7), it means that all receivable logical channels are stored in the channel list, so that the channel search by the auto search is finished (step S8).

As described later, in a state where the auto search is finished, there are many receivable logical channels. Therefore, desired language is selected from them (step S9). The selection is performed with the remote controller 105, for example.

After that, by pressing a channel setting finish button of the remote controller 105, the channel list stored in the memory unit 13 is rewritten to a channel list including only the selected language (step S10). Then the display of the OSD is cleared, and the creation of the channel list is finished (step S11).

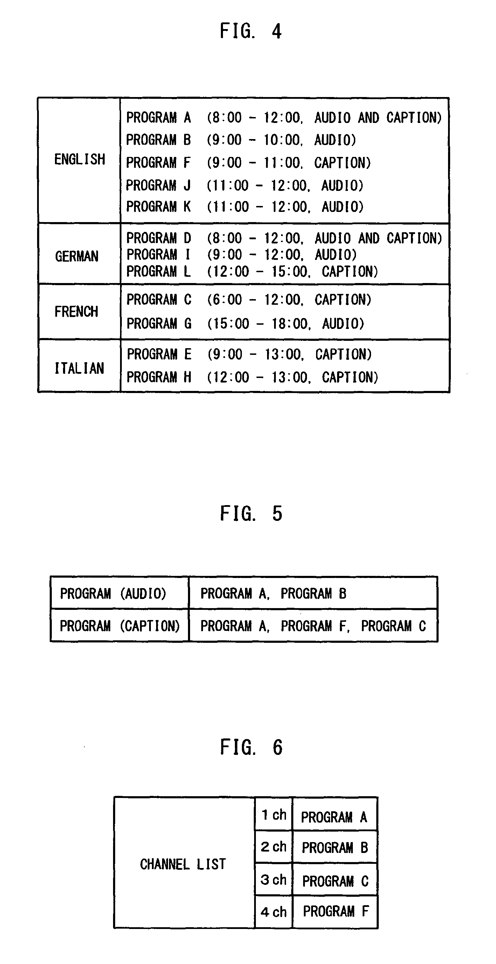

Fig. 4 is a diagram showing one example of a program after finishing the auto search (step S8 in Fig. 3), in which the programs are classified by languages. As shown in Fig. 4, in this state, various languages can be received. This state may be displayed by the OSD when setting the language, and the information is always held until updated. In a state where the language is not selected, the channel list is as shown in Fig. 4.

In the state shown in Fig. 4, the viewer selects the language (step S9 in Fig. 3) . Fig. 5 is a diagram showing one example of a state in which the language is selected, and showing an available language state of the programs included in the channel list when English and French are selected in the state shown in Fig. 4 and the current time is ten o'clock.
In Fig. 4, at ten o'clock, the programs in which the language is English are a program A (audio and caption are available), a program B (audio is available), and a program F (caption is available), and the program in which the language is French is a program C (caption is available). Therefore, as shown in Fig. 5, the programs in which audio is available are the programs A and B, and the programs in which caption is available is the programs A, F, and C.

Fig. 6 is a diagram showing one example of the channel list. Since the program in which each language is available is allocated to the channel, the channel list at ten o'clock is as shown in Fig. 6. In Fig. 6, although the programs are allocated from Channel 1 to Channel 4 in sequence, the channel number indicated on the remote controller or the EPG and the number in the channel list (Channel 1 to Channel 4) shown in Fig. 6 may be different from each other. The states shown in Figs. 5 and 6 are not displayed in general, however, they may be displayed by the OSD.
When the channel list is in the state shown in Fig. 6, even when a channel UP key or a channel DOWN key is pressed while viewing the television, the programs (events) corresponding to the languages not desired, such as the programs D and E in Fig. 4 are not displayed on the LCD 104, so that it is not necessary to press the channel UP key and the channel DOWN key of the remote controller 105 many.times.

Further, once the language is selected, the component descriptor in the transport stream is automatically searched to rewrite the channel list. It is preferred that update timing is at midnight, regardless of the regular basis or irregular basis. In automatic updating, the channel list is not displayed as the OSD in principle.

The present invention may employ various embodiments other than that described above.
For example, the programs in which only the audio is available or the programs in which only the caption is available may be selected. The programs in which the caption and audio are in different languages, as English is available in the audio and French is available in the caption, may also be selected. Furthermore, the programs in which both the caption and audio are available may be selected.

In the above-described embodiment, although the channel list and the language are displayed by the OSD when setting the channel, other forms of display than the OSD may be used. Alternatively, without displaying the channel list and the selectable countries by the OSD, the desired language may be selected by a language selection button, such as English, French, and the like, provided in advance on the input device such as the remote controller 105.

Further, as long as the digital receiver 1 is used, a configuration of an external device may be not only the liquid crystal display television utilizing the LCD 104 as shown in Fig. 1, but also another digital television such as a plasma display panel television. In addition, the external device may be an analog/digital television having an analog receiving function, or a set top box not including a display device.

## Claims

1. A digital broadcasting receiver (1) comprising:
a tuner (2) that takes out a signal of a specific frequency band from an RF (Radio Frequency) signal;
a demodulating unit (3) to which an output signal of the tuner (2) is inputted;
a signal separation unit (5) that separates an output signal of the demodulating unit (3) into video data, audio data, caption data, and control data including language information;
a memory unit (13) in which a channel list is stored;
an input unit (12) that performs channel operation; and
a control unit (4) that controls the channel based on a control signal from the input unit (12), wherein
a language of a caption and/or audio is selected at the input unit (12),
the control unit (4) reads out the language information of the control data, and
the channel corresponding to the language selected at the input unit (12) is stored in the channel list of the memory unit (13) based on the language information.

2. The digital broadcasting receiver (1) according to Claim 1, wherein the channel list is displayed by an OSD (On Screen Display) when setting the channel.

3. The digital broadcasting receiver (1) according to Claim 1 or 2, wherein the control unit (4) reads out the language information regularly or irregularly, and the channel list is automatically updated based on the selected language.

4. The digital broadcasting receiver (1) according to any one of Claims 1 to 3, wherein the language information is included in a component descriptor of an EIT (Event Information Table) in a transport stream.
